(19) **Europäisches Patentamt / European Patent Office / Office européen des brevets**

(11) **EP 4 561 226 A1**

(12) **EUROPEAN PATENT APPLICATION**
published in accordance with Art. 153(4) EPC

(43) Date of publication:
**28.05.2025 Bulletin 2025/22**

(21) Application number: **23849103.9**

(22) Date of filing: **28.06.2023**

(51) International Patent Classification (IPC):
**H04W 72/04** (2023.01)     **H04B 7/0456** (2017.01)

(52) Cooperative Patent Classification (CPC):
**H04B 7/0456; H04B 7/06; H04W 72/04**

(86) International application number:
**PCT/CN2023/103472**

(87) International publication number:
**WO 2024/027393 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.07.2022 CN 202210912610**

(71) Applicant: **Huawei Technologies Co., Ltd.**
**Shenzhen, Guangdong 518129 (CN)**

(72) Inventors:
• **ZHANG, Didi**
  **Shenzhen, Guangdong 518129 (CN)**

• **WANG, Xiaohan**
  **Shenzhen, Guangdong 518129 (CN)**
• **JIN, Huangping**
  **Shenzhen, Guangdong 518129 (CN)**
• **DING, Mengying**
  **Shenzhen, Guangdong 518129 (CN)**
• **PENG, Jinlin**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **CHANNEL STATE INFORMATION FEEDBACK METHOD AND APPARATUS**

(57)     This application provides a channel state information feedback method and apparatus, to implement joint design of codebooks of a plurality of TRPs on a plurality of frequency bands. In the method, configuration information indicates an association relationship between a plurality of frequency bands and a plurality of TRPs. To be specific, the plurality of TRPs are associated with a first frequency band, and at least one TRP in the plurality of TRPs is further associated with a second frequency band. In this way, a terminal can feed back, in a targeted manner, CSI corresponding to the plurality of TRPs associated with each frequency band by using coherent joint transmission, for example, CSI corresponding to the plurality of TRPs on the first frequency band, and CSI corresponding to the at least one TRP on the second frequency band, to implement joint design of the codebooks of the plurality of TRPs on the plurality of frequency bands.

FIG. 4

EP 4 561 226 A1

## Description

This application claims priority to Chinese Patent Application No. 202210912610.3, filed with the China National Intellectual Property Administration on July 30, 2022 and entitled "CHANNEL STATE INFORMATION FEEDBACK METHOD AND APPARATUS", which is incorporated herein by reference in its entirety.

## TECHNICAL FIELD

This application relates to the communication field, and in particular, to a channel state information feedback method and apparatus.

## BACKGROUND

In new radio (new radio, NR), it is an important technical means for a network side to obtain downlink precoding by feeding back corresponding channel state information (channel state information, CSI) by a terminal to a network. For example, the network may separately send a reference signal to the terminal via a plurality of transmission reception points (transmission reception points, TRPs). Correspondingly, the terminal may estimate a downlink channel based on the received reference signal, and feed back, to the network in a form of a codebook, an estimated channel or precoding information determined based on the estimated channel, so that the network determines downlink precoding between each TRP and the terminal based on the codebook.

To further increase a system capacity, a multi-frequency convergence technology emerges. To be specific, the terminal can perform data transmission with the network on a plurality of frequency bands simultaneously. In this case, how to implement joint design of codebooks of a plurality of TRPs on a plurality of frequency bands is a hot issue in current research.

## SUMMARY

Embodiments of this application provide a channel state information feedback method and apparatus, to implement joint design of codebooks of a plurality of TRPs on a plurality of frequency bands.

To achieve the foregoing objective, this application uses the following technical solutions.

According to a first aspect, a channel state information feedback method is provided. The method includes: A terminal receives configuration information from a network device, and feeds back channel state information CSI to the network device based on the configuration information. The configuration information indicates that a plurality of TRPs are associated with a first frequency band, at least one TRP in the plurality of TRPs is further associated with a second frequency band, and the plurality of TRPs are TRPs associated with the network device. The CSI includes CSI corresponding to each TRP in the plurality of TRPs on the first frequency band, and CSI corresponding to each TRP in the at least one TRP on the second frequency band.

It can be learned from the method according to the first aspect that, in a scenario in which a plurality of TRPs are on a plurality of frequency bands, the configuration information indicates an association relationship between the plurality of frequency bands and the plurality of TRPs, for example, the plurality of TRPs are associated with the first frequency band, and at least one TRP in the plurality of TRPs is further associated with the second frequency band. In this way, the terminal can feed back, in a targeted manner, CSI corresponding to the plurality of TRPs associated with each frequency band by using coherent joint transmission CJT, for example, CSI corresponding to each TRP in the plurality of TRPs on the first frequency band, and CSI corresponding to each TRP in the at least one TRP on the second frequency band, to implement joint design of codebooks of the plurality of TRPs on the plurality of frequency bands.

In a possible design solution, the configuration information indicates that a first cell identifier is associated with a first reference signal resource set, and a second cell identifier is associated with a second reference signal resource set, where the first cell identifier is associated with the first frequency band, the second cell identifier is associated with the second frequency band, the first reference signal resource set includes a reference signal resource used by the plurality of TRPs, and the second reference signal resource set includes a reference signal resource used by the at least one TRP. In other words, an association relationship between a plurality of cells and a plurality of reference signal resource sets may be reused to implicitly indicate an association relationship between the plurality of TRPs and the plurality of frequency bands, so that the terminal can perform joint design of multi-frequency multi-station codebooks based on an indication.

In a possible design solution, the configuration information indicates that a first cell identifier is associated with a first antenna port group set, and a second cell identifier is associated with a second antenna port group set, where the first cell identifier is associated with the first frequency band, the second cell identifier is associated with the second frequency band, the first antenna port group set includes a plurality of antenna port groups used by the plurality of TRPs, and the second antenna port group set includes an antenna port group used by the at least one TRP. In other words, an association relationship between a plurality of cells and a plurality of antenna port groups may be reused to implicitly indicate an association relationship between the plurality of TRPs and the plurality of frequency bands, so that the terminal can perform joint design of multi-frequency multi-station codebooks based on an indication.

In a possible design solution, the configuration information indicates that a first reference signal resource is associated with a first antenna port group set, and a second reference signal resource is associated with a second antenna port group set, where the first reference signal resource is configured for use on the first frequency band, the second reference signal resource is configured for use on the second frequency band, the first antenna port group set includes a plurality of antenna port groups used by the plurality of TRPs, and the second antenna port group set includes an antenna port group used by the at least one TRP. In other words, an association relationship between a plurality of reference signal resources and a plurality of antenna port groups may be reused to implicitly indicate an association relationship between the plurality of TRPs and the plurality of frequency bands, so that the terminal can perform joint design of multi-frequency multi-station codebooks based on an indication.

Alternatively, the configuration information indicates that the first reference signal resource set is associated with a first antenna port group set, and the second reference signal resource set is associated with a second antenna port group set, where the first reference signal resource set is configured for use on the first frequency band, the second reference signal resource set is configured for use on the second frequency band, the first antenna port group set includes a plurality of antenna port groups used by the plurality of TRPs, and the second antenna port group set includes an antenna port group used by the at least one TRP. In other words, an association relationship between a plurality of reference signal resource sets and a plurality of antenna port groups may be reused to implicitly indicate an association relationship between the plurality of TRPs and the plurality of frequency bands, so that the terminal can perform joint design of multi-frequency multi-station codebooks based on an indication.

In a possible design solution, the at least one TRP includes a first TRP, and that the terminal feeds back the CSI to the network device based on the configuration information includes: The terminal feeds back at least one of a first space-frequency base of the first TRP and a second space-frequency base of the first TRP to the network device based on the configuration information, where the first space-frequency base indicates a space-frequency eigen-basis of a downlink channel corresponding to the first TRP on the first frequency band, and the second space-frequency base indicates a space-frequency eigen-basis of a downlink channel corresponding to the first TRP on the second frequency band.

Optionally, when the first space-frequency base is the same as the second space-frequency base, the terminal feeds back the first space-frequency base or the second space-frequency base to the network device; or when the first space-frequency base is partially the same as the second space-frequency base, the terminal feeds back the first space-frequency base and the second space-frequency base to the network device. Optionally, that the first space-frequency base is partially the same as the second space-frequency base may also be understood as that some common subspace exists.

Optionally, that the terminal feeds back the CSI to the network device based on the configuration information further includes: The terminal feeds back a first non-zero combination coefficient and a second non-zero combination coefficient to the network device based on the configuration information. The first non-zero combination coefficient is a preset number of non-zero coefficients selected in descending order of amplitude values from non-zero coefficients obtained by projecting a downlink channel matrix or a precoding matrix corresponding to the first TRP on the first frequency band onto the first space-frequency base. The preset number may be determined based on an indication of the network device. The second non-zero combination coefficient is a preset number of non-zero coefficients selected in descending order of amplitude values from non-zero coefficients obtained by projecting a downlink channel matrix or a precoding matrix corresponding to the first TRP on the second frequency band onto the second space-frequency base. The preset number may be determined based on an indication of the network device.

It can be learned that, because antennas of a same TRP may share an antenna installation platform, eigen-basis correlation between downlink channels of the TRP on different frequency bands is good in space domain and frequency domain. Therefore, space-frequency bases corresponding to the same TRP on different frequency bands may share a space-frequency base, that is, these space-frequency bases may be at least partially identical. In this case, the terminal may determine one of the space-frequency bases, and feed back the space-frequency base to the network device, to reduce communication overheads.

In a possible design solution, when the plurality of TRPs on a same frequency band provide services for the terminal by using coherent joint transmission CJT, the plurality of TRPs correspond to one piece of CSI on the first frequency band, and the at least one TRP corresponds to one piece of CSI on the second frequency band.

In a possible design solution, the configuration information further indicates the plurality of TRPs to perform joint design and feedback of codebooks. That the plurality of TRPs perform joint design and feedback of the codebooks means that the plurality of TRPs on a same frequency band use CJT. In other words, the plurality of TRPs on a same frequency band provide services for the terminal in a CJT manner. In addition, that the plurality of TRPs perform joint design and feedback of the codebooks means that one TRP that is in the plurality of TRPs and that corresponds to a plurality of frequency bands shares a space-frequency base on the plurality of frequency bands.

According to a second aspect, a channel state information feedback method is provided. The method includes: A network device sends configuration information of the network device to a terminal, to receive channel state information CSI fed back by the terminal based on the configuration information. The configuration information indicates that a plurality of TRPs are associated with a first frequency band, at least one TRP in the plurality of TRPs is further associated with a second frequency band, and the plurality of TRPs are TRPs associated with the network device. The CSI includes CSI corresponding to each TRP in the plurality of TRPs on the first frequency band, and CSI corresponding to each TRP in the at least one TRP on the second frequency band.

In a possible design solution, the configuration information indicates that a first cell identifier is associated with a first reference signal resource set, and a second cell identifier is associated with a second reference signal resource set, where the first cell identifier is associated with the first frequency band, the second cell identifier is associated with the second frequency band, the first reference signal resource set includes a reference signal resource used by the plurality of TRPs, and the second reference signal resource set includes a reference signal resource used by the at least one TRP.

In a possible design solution, the configuration information indicates that a first cell identifier is associated with a first antenna port group set, and a second cell identifier is associated with a second antenna port group set, where the first cell identifier is associated with the first frequency band, the second cell identifier is associated with the second frequency band, the first antenna port group set includes a plurality of antenna port groups used by the plurality of TRPs, and the second antenna port group set includes an antenna port group used by the at least one TRP.

In a possible design solution, the configuration information indicates that a first reference signal resource is associated with a first antenna port group set, and a second reference signal resource is associated with a second antenna port group set, where the first reference signal resource is configured for use on the first frequency band, the second reference signal resource is configured for use on the second frequency band, the first antenna port group set includes a plurality of antenna port groups used by the plurality of TRPs, and the second antenna port group set includes an antenna port group used by the at least one TRP.

Alternatively, the configuration information indicates that the first reference signal resource set is associated with a first antenna port group set, and the second reference signal resource set is associated with a second antenna port group set, where the first reference signal resource set is configured for use on the first frequency band, the second reference signal resource set is configured for use on the second frequency band, the first antenna port group set includes a plurality of antenna port groups used by the plurality of TRPs, and the second antenna port group set includes an antenna port group used by the at least one TRP.

In a possible design solution, the at least one TRP includes a first TRP, and that the network device receives the CSI fed back by the terminal based on the configuration information includes: The network device receives at least one of a first space-frequency base of the first TRP and a second space-frequency base of the first TRP that are fed back by the terminal based on the configuration information, where the first space-frequency base indicates a space-frequency eigen-basis of a downlink channel corresponding to the first TRP on the first frequency band, and the second space-frequency base indicates a space-frequency eigen-basis of a downlink channel corresponding to the first TRP on the second frequency band. Optionally, the first space-frequency base is the same as the second space-frequency base.

Optionally, when the first space-frequency base is the same as the second space-frequency base, the network device receives the first space-frequency base or the second space-frequency base that is fed back by the terminal based on the configuration information; or when the first space-frequency base is partially the same as the second space-frequency base, the network device receives the first space-frequency base and the second space-frequency base that are fed back by the terminal based on the configuration information. Optionally, that the first space-frequency base is partially the same as the second space-frequency base may also be understood as that some common subspace exists.

Optionally, that the network device receives the CSI fed back by the terminal based on the configuration information further includes: The network device receives a first non-zero combination coefficient and a second non-zero combination coefficient that are fed back by the terminal based on the configuration information. The first non-zero combination coefficient is a preset number of non-zero coefficients selected in descending order of amplitude values from non-zero coefficients obtained by projecting a downlink channel matrix or a precoding matrix corresponding to the first TRP on the first frequency band onto the first space-frequency base. The preset number may be determined based on an indication of the network device. The second non-zero combination coefficient is a preset number of non-zero coefficients selected in descending order of amplitude values from non-zero coefficients obtained by projecting a downlink channel matrix or a precoding matrix corresponding to the first TRP on the second frequency band onto the second space-frequency base. The preset number may be determined based on an indication of the network device.

In a possible design solution, when the plurality of TRPs on a same frequency band provide services for the terminal by using coherent joint transmission CJT, the plurality of TRPs correspond to one piece of CSI on the first frequency band, and the at least one TRP corresponds to one piece of CSI on the second frequency band.

In a possible design solution, the configuration information further indicates the plurality of TRPs to perform joint design and feedback of codebooks. That the plurality of TRPs perform joint design and feedback of the codebooks means that the plurality of TRPs on a same frequency band use CJT, and at least one TRP that is in the plurality of TRPs and that corresponds to a plurality of frequency bands shares a space-frequency base on the plurality of frequency bands.

In addition, for another technical effect of the channel state information feedback method according to the second aspect, refer to the technical effects of the channel state information feedback method according to the first aspect. Details are not described herein again.

According to a third aspect, a channel state information feedback apparatus is provided. The apparatus includes modules configured to perform the method according to the first aspect, for example, a transceiver module and a processing module. The transceiver module is configured to perform a receiving and sending function of the apparatus, and the processing module is configured to perform another function of the apparatus other than receiving and sending. For example, the transceiver module is configured to receive configuration information from a network device; and the processing module is configured to control, based on the configuration information, the transceiver module to feed back channel state information CSI to the network device. The configuration information indicates that a plurality of TRPs are associated with a first frequency band, at least one TRP in the plurality of TRPs is further associated with a second frequency band, and the plurality of TRPs are TRPs associated with the network device. The CSI includes CSI corresponding to each TRP in the plurality of TRPs on the first frequency band, and CSI corresponding to each TRP in the at least one TRP on the second frequency band.

Optionally, the transceiver module may include a sending module and a receiving module. The sending module is configured to implement a sending function of the apparatus according to the third aspect, and the receiving module is configured to implement a receiving function of the apparatus according to the third aspect.

Optionally, the apparatus according to the third aspect may further include a storage module, and the storage module stores a program or instructions. When the processing module executes the program or the instructions, the apparatus may perform the channel state information feedback method according to the first aspect.

It should be noted that the apparatus according to the third aspect may be a terminal, may be a chip (system) or another part or component that may be disposed in the terminal, or may be an apparatus including the terminal. This is not limited in this application.

In addition, for technical effects of the apparatus according to the third aspect, refer to the technical effects of the method according to the first aspect. Details are not described herein again.

According to a fourth aspect, a channel state information feedback apparatus is provided. The apparatus includes modules configured to perform the method according to the second aspect, for example, a transceiver module and a processing module. The transceiver module is configured to perform a receiving and sending function of the apparatus, and the processing module is configured to perform another function of the apparatus other than receiving and sending. For example, the processing module is configured to control the transceiver module to send configuration information of a network device to a terminal; and the transceiver module is configured to receive channel state information CSI fed back by the terminal based on the configuration information. The configuration information indicates that a plurality of TRPs are associated with a first frequency band, at least one TRP in the plurality of TRPs is further associated with a second frequency band, and the plurality of TRPs are TRPs associated with the network device. The CSI includes CSI corresponding to each TRP in the plurality of TRPs on the first frequency band, and CSI corresponding to each TRP in the at least one TRP on the second frequency band.

Optionally, the transceiver module may include a sending module and a receiving module. The sending module is configured to implement a sending function of the apparatus according to the fourth aspect, and the receiving module is configured to implement a receiving function of the apparatus according to the fourth aspect.

Optionally, the apparatus according to the fourth aspect may further include a storage module, and the storage module stores a program or instructions. When the processing module executes the program or the instructions, the apparatus may perform the channel state information feedback method according to the second aspect.

It should be noted that, the apparatus according to the fourth aspect may be a network device, a chip (system) or another part or component that may be disposed on the network device, or an apparatus that includes the network device. This is not limited in this application.

In addition, for technical effects of the apparatus according to the fourth aspect, refer to the technical effects of the method according to the second aspect. Details are not described herein again.

According to a fifth aspect, a communication apparatus is provided. The communication apparatus includes a processor, and the processor is configured to perform the method according to the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the communication apparatus according to the fifth aspect may further include a memory. The memory and the processor may be integrated together, or may be disposed separately. The memory may be configured to store a computer program and/or data related to the method according to the first aspect or the second aspect.

In this application, the communication apparatus according to the fifth aspect may be the foregoing terminal or network device, may be a chip (system) or another part or component that may be disposed in the terminal or the network device, or may be an apparatus including the terminal or the network device.

**In** addition, for technical effects of the communication apparatus according to the fifth aspect, refer to the technical effects of the method according to the first aspect or the second aspect. Details are not described herein again.

According to a sixth aspect, a chip is provided. The chip includes a package substrate and a processing circuit disposed on the package substrate. The processing circuit is configured to perform the method according to the first aspect or the second aspect.

**In** addition, for technical effects of the chip according to the sixth aspect, refer to the technical effects of the method according to the first aspect or the second aspect. Details are not described herein again.

According to a seventh aspect, a communication apparatus is provided. The communication apparatus includes a processor. The processor is coupled to a memory, and the processor is configured to execute a computer program stored in the memory, so that the communication apparatus performs the method according to the first aspect or the second aspect.

**In** a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

**In** this application, the communication apparatus according to the seventh aspect may be the foregoing terminal or network device, may be a chip (system) or another part or component that may be disposed in the terminal or the network device, or may be an apparatus including the terminal or the network device.

**In** addition, for technical effects of the communication apparatus according to the seventh aspect, refer to the technical effects of the method according to the first aspect or the second aspect. Details are not described herein again.

According to an eighth aspect, a communication apparatus is provided, including a processor and a memory. The memory is configured to store a computer program. When the processor executes the computer program, the communication apparatus is enabled to perform the method according to the first aspect or the second aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this application, the communication apparatus according to the eighth aspect may be the foregoing terminal or network device, may be a chip (system) or another part or component that may be disposed in the terminal or the network device, or may be an apparatus including the terminal or the network device.

In addition, for technical effects of the communication apparatus according to the eighth aspect, refer to the technical effects of the method according to the first aspect or the second aspect. Details are not described herein again.

According to a ninth aspect, a communication apparatus is provided, including a processor. The processor is configured to: after being coupled to a memory and reading a computer program in the memory, perform, based on the computer program, the method according to the first aspect or the second aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this application, the communication apparatus according to the ninth aspect may be the foregoing terminal or network device, may be a chip (system) or another part or component that may be disposed in the terminal or the network device, or may be an apparatus including the terminal or the network device.

In addition, for technical effects of the communication apparatus according to the ninth aspect, refer to the technical effects of the method according to the first aspect or the second aspect. Details are not described herein again.

According to a tenth aspect, a chip is provided. The chip includes a package substrate, and a processing circuit and a storage circuit that are disposed on the package substrate. The storage circuit is configured to store computer instructions. When the processing circuit executes the instructions, the chip is enabled to perform the method according to the first aspect or the second aspect.

In addition, for technical effects of the chip according to the tenth aspect, refer to the technical effects of the method according to the first aspect or the second aspect. Details are not described herein again.

According to an eleventh aspect, a communication system is provided. The communication system includes the terminal according to the first aspect and the network device according to the second aspect.

According to a twelfth aspect, a computer-readable storage medium is provided, including a computer program or instructions. When the computer program or the instructions are run on a computer, the computer is enabled to perform the method according to the first aspect or the second aspect.

According to a thirteenth aspect, a computer program product is provided, including a computer program or instructions. When the computer program or the instructions are run on a computer, the computer is enabled to perform the method according to the first aspect or the second aspect.

**BRIEF DESCRIPTION OF DRAWINGS**

FIG. 1 is a schematic flowchart of channel estimation;

FIG. 2 is a diagram of a structure of a multi-station coordinated codebook;

FIG. 3 is a diagram of an architecture of a communication system according to an embodiment of this application;

FIG. 4 is a schematic flowchart of a channel state information feedback method according to an embodiment of this application;

FIG. 5 is a diagram of a scenario of a channel state information feedback method according to an embodiment of this application;

FIG. 6 is a diagram of another scenario of a channel state information feedback method according to an embodiment of this application;

FIG. 7 is a diagram of still another scenario of a channel state information feedback method according to an embodiment of this application;

FIG. 8 is a diagram of yet another scenario of a channel state information feedback method according to an embodiment of this application;

FIG. 9 is a diagram of a structure of a channel state information feedback apparatus according to an embodiment of this application;

FIG. 10 is a diagram of a structure of a communication apparatus according to an embodiment of this application; and

FIG. 11 is a diagram of a structure of a chip according to an embodiment of this application.

**DESCRIPTION OF EMBODIMENTS**

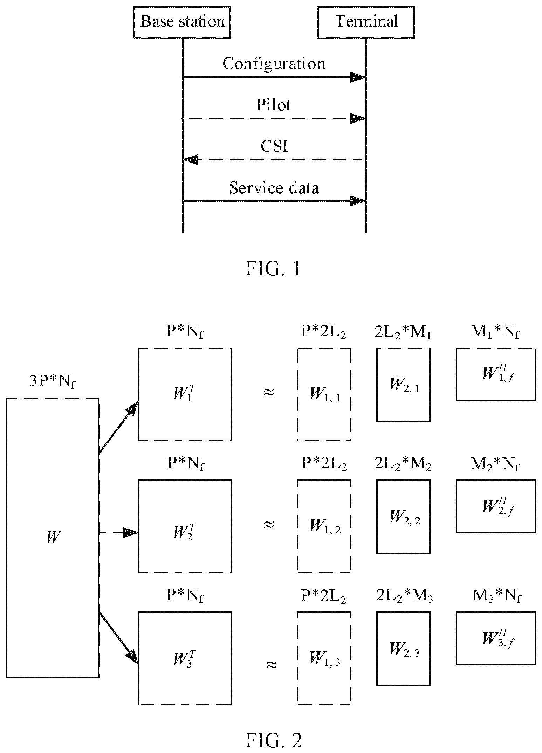

First, this application describes a single-station codebook operating on one frequency band. The codebook in this case may also be referred to as a single-station single-frequency codebook. An NR system has higher requirements on a system capacity, spectral efficiency, and the like. A 5G FDD system such as a frequency division duplex (frequency division duplex, FDD) massive (massive) multiple-input multiple-output (multiple-input multiple-output, MIMO) system is used as an example. It is an important technical means for estimating a downlink channel in the FDD system by obtaining CSI of the downlink channel. Different from a time division duplex (time division duplex, TDD) system, the FDD system has a larger frequency spacing between uplink and downlink channels, resulting in incomplete reciprocity between the uplink channel and the downlink channel. In this case, the FDD system cannot obtain the complete downlink channel by estimating the uplink channel. Therefore, the FDD system requires a terminal to feed back the CSI of the downlink channel to a base station. As shown in FIG. 1, the base station may first send a configuration used for channel measurement to the terminal, for example, notify the terminal of time and behavior for performing channel measurement. Then, the base station may send a reference signal used for channel measurement to the terminal. The terminal may perform channel measurement based on the received reference signal, to obtain CSI and feed back the CSI to the base station. The base station completes estimation of the downlink channel or precoding reconstruction, for example, determining of precoding information of downlink data based on the CSI fed back by the terminal, to perform precoding on the downlink data and send the downlink data to the terminal.

In addition, the uplink and downlink channels in the FDD system are not completely reciprocal, that is, some information has reciprocity, for example, angle reciprocity and delay reciprocity. Therefore, the FDD system may design a CSI obtaining solution based on the angle reciprocity and the delay reciprocity. For example, the base station first estimates the uplink channel, and determines some prior information of the downlink channel based on the estimated uplink channel, for example, information about an angle and a delay of the downlink channel. Then, the base station loads the information about the angle and the delay to a downlink reference signal, and informs the terminal to measure the downlink reference signal, to feed back supplementary information required by the base station to estimate the downlink channel. Finally, the base station completes the estimation of the downlink channel based on the information about the angle and the delay obtained through uplink channel estimation and with reference to the supplementary information fed back by the terminal.

In the NR system, different codebook types may correspond to different CSI. The following provides detailed descriptions.

In a type 2 (type II) codebook in an R16 version protocol and a type 2 codebook in an R17 version protocol in 3GPP, a codebook structure corresponding to CSI is a three-stage codebook structure, for example, $W = W_1 W_2 W_f^H$. For the type 2 codebook in R16, $W_1 \in \mathbb{N}^{P \times 2L}$ is a space domain base, and represents 2L beams selected from P space domain beams. P is an integer greater than 1, and 2L is a positive integer less than or

$W_f^H \in \mathbb{C}^{N_3 \times M}$

equal to P. is a frequency domain base, and represents M columns selected from a frequency domain base set, and $N_3$ is a number of subbands (subbands) corresponding to a precoding matrix indicator (precoding matrix

$W_2 \in \mathbb{C}^{2L \times M}$

indicator, PMI) in frequency domain. is a combination coefficient quantized according to a quantization criterion, that is, represents a weight corresponding to each of the 2L beams and the M columns. For the type 2 codebook in

$W_1 \in \mathbb{N}^{P \times K_1}$

R17, is a port selection matrix, and represents $K_1$ ports selected from P ports. P is an integer greater

$W_f^H \in \mathbb{C}^{N_3 \times M}$

than 1, and $K_1$ is a positive integer less than or equal to P. is a frequency domain base, and represents M columns selected from a frequency domain base set, and $N_3$ is a number of subbands corresponding to a PMI.

$W_2 \in \mathbb{C}^{K_1 \times M_v}$

is a combination coefficient quantized according to a quantization criterion, that is, represents a weight corresponding to each of the $K_1$ ports and the M columns. On this basis, after obtaining the CSI through channel measurement, the terminal needs to report, by using uplink control information (uplink control information, UCI), a codebook corresponding to the CSI, for example, parameters such as the selected space domain base ($W_1$), frequency

domain base ( $W_f^H$ ), combination coefficient ($W_2$), and location of the combination coefficient in the codebook.

To further improve network performance, a 3GPP R18 version protocol proposes a two-stage codebook reporting solution based on a channel statistical covariance matrix, for example, $H_{dl} = BC_{13}C_2$. $B$ is a DFT base of a long-periodicity projection, $C_{13}$ is a channel long-periodicity combination coefficient, $BC_{13}$ combination is a space-frequency joint eigen-basis base, and $C_2$ is a short-periodicity combination coefficient.

Specifically, the terminal may obtain a downlink RB-level channel by measuring the downlink reference signal, for example, a CSI-RS, as shown in the following formula 1:

$$H_{ideal}(k) \in \mathbb{C}^{N_{Rx} \times N_{Tx}}, k = 0, \ldots, N_{RB} - 1 \quad (1),$$

where

$N_{Rx}$ is a number of receive antennas of UE, $N_{Tx}$ is a number of CSI-RS ports, and $N_{RB}$ is a number of RBs in frequency domain.

The terminal may determine a corresponding subband average channel $\overline{H}(m)$ based on a downlink RB-level signal, as shown in the following formula 2:

$$\overline{H}(m) \in \mathbb{C}^{N_{Rx} \times N_{Tx}} = \frac{1}{N_{RB}^{SB}} \sum_{k=m*N_{RB}^{SB}}^{(m+1)*N_{RB}^{SB}-1} H_{ideal}(k), \quad m = 0, \ldots, N_{SB} \quad (2),$$

where

$N_{RB}^{SB}$ is a number of RBs on one subband, and $N_{SB}$ is a number of subbands on one frequency band. In addition, the obtaining of the subband average channel provided herein is only one possible manner. For example, the subband average channel may alternatively be obtained by extracting an RB channel on the subband. A specific form is not limited herein, and does not affect joint design of multi-frequency multi-station codebooks in the present invention patent.

The terminal may determine a channel covariance matrix based on the average channel $\overline{H}(m)$, and determine a space-frequency joint channel covariance matrix based on channel covariances at a plurality of moments. The terminal performs singular value decomposition (singular value decomposition, SVD) on the space-frequency joint channel covariance matrix, and uses first L columns as the space-frequency joint eigen-basis, to represent a space-frequency eigen-basis of a channel. L is a positive integer, and a value of L may be determined based on an indication of the base station, or may be determined by the terminal. This is not limited. It may be understood that, because overheads of directly feeding back, by the terminal, a space-frequency joint eigen-basis to the base station are large, the terminal may project the space-frequency joint eigen-basis onto a group of DFT orthogonal basis vector space, to obtain the channel long-periodicity combination coefficient ($C_{13}$). In this case, the terminal may feed back only the channel long-periodicity combination coefficient and the selected DFT base ($B$) to the base station. In addition, the terminal may further project a channel matrix or a precoding matrix determined based on the channel matrix onto the space-frequency joint eigen-basis, to obtain corresponding combination coefficients. The terminal may select a preset number of combination coefficients from these combination coefficients in descending order of amplitude values. The terminal may feed back the short-periodicity combination coefficient (including the preset number of combination coefficients) and an index corresponding to the preset number of combination coefficients to the base station based on the preset number of combination coefficients. The preset number may be configured by the base station, and is not limited. Correspondingly, the base station may restore, based on the received space-frequency joint eigen-basis, short-periodicity combination coefficient, and index corresponding to the preset number of combination coefficients, a downlink channel or precoding corresponding to the subband, or complete reconstruction of the downlink subband channel or precoding.

It may be understood that the space-frequency joint eigen-basis is obtained based on statistical covariance information of the downlink channel, that is, statistical information, and therefore may be fed back to the base station in a long-periodicity reporting manner. The short-periodicity combination coefficient is obtained based on an instantaneous channel, and therefore may be fed back to the base station in a short-periodicity reporting manner.

In addition, the foregoing codebook is mainly for a single-station single-frequency codebook (for example, one TRP corresponds to one frequency band). To further improve feedback efficiency, a multi-station coordinated codebook (for example, a plurality of TRPs correspond to one frequency band) and a single-station multi-frequency codebook (for example, one TRP corresponds to a plurality of frequency bands) are subsequently proposed, and are separately described below.

Then, this application describes a multi-station codebook operating on one frequency band. The codebook in this case may also be referred to as a multi-station coordinated codebook. A 3GPP R18 version protocol proposes a coherent joint transmission (coherent joint transmission, CJT) solution in which a plurality of TRPs perform joint precoding design. For example, for channels or precoding in a coordinated cluster corresponding to a plurality of TRPs, a multi-station coordinated codebook corresponding to the plurality of TRPs may be split into a channel or precoding of each TRP for representation. The channel or precoding of each TRP is represented by a space domain base and a frequency domain base that correspond to the TRP. For details, refer to the codebook structure in the R16 version protocol. Details are not described again. In addition, different distances and transmission paths from different TRPs to the terminal cause different channel sparsity and large-scale parameters between different TRPs and the terminal. Consequently, when a channel or precoding is represented by a corresponding space domain base and a corresponding frequency domain base, channel or precoding combination coefficients are not evenly distributed between different TRPs. Therefore, joint allocation of short-periodicity combination coefficients of different TRPs needs to be considered in the multi-station coordinated codebook.

As shown in FIG. 2, an example in which three TRPs perform CJT in coordination is used for description. A terminal may determine a space domain base $W_{1,1}$ corresponding to a TRP 1 and a frequency domain base $W_{1,f}^H$ corresponding to the TRP 1, a space domain base $W_{1,2}$ corresponding to a TRP 2 and a frequency domain base $W_{2,f}^H$ corresponding to the TRP 2, and a space domain base $W_{1,3}$ corresponding to a TRP 3 and a frequency domain base $W_{3,f}^H$ corresponding to the TRP 3. $W_{1,1}$, $W_{1,2}$, and $W_{1,3} \in \mathbb{N}^{P \times 2L_2}$, representing $2L_2$ beams selected from P space domain beams. $W_{1,f}^H \in \mathbb{C}^{M_1 \times N_f}$, where $M_1$ represents $M_1$ columns selected from a frequency domain base set, and $N_f$ is a number of subbands corresponding to a PMI. $W_{2,f}^H \in \mathbb{C}^{M_2 \times N_f}$, where $M_2$ represents $M_2$ columns selected from the frequency domain base set. $W_{3,f}^H \in \mathbb{C}^{M_3 \times N_f}$, where $M_3$ represents $M_3$ columns selected from the frequency domain base set. The terminal may further obtain a short-periodicity combination coefficient of each TRP, and determine that a total number of short-periodicity combination coefficients that need to be reported by the three TRPs is S. S may be configured by a network device (for example, a base station) or predefined in a protocol. This is not limited in this application. The terminal may select S short-periodicity combination coefficients with large amplitude values from the short-periodicity combination coefficients of the three TRPs, and then determine, based on the S short-periodicity combination coefficients, a short-periodicity combination coefficient $W_{2,1}$ corresponding to the TRP 1, a short-periodicity combination coefficient $W_{2,2}$ corresponding to the TRP 2, and a short-periodicity combination coefficient $W_{2,3}$ corresponding to the TRP 3. $W_{2,1} \in \mathbb{C}^{2L_2 \times M_1}$ represents a weight corresponding to each of the $2L_2$ beams and the $M_1$ columns. $W_{2,2} \in \mathbb{C}^{2L_2 \times M_2}$ represents a weight corresponding to each of the $2L_2$ beams and the $M_2$ columns. $W_{2,3} \in \mathbb{C}^{2L_2 \times M_3}$ represents a weight corresponding to each of the $2L_2$ beams and the $M_3$ columns. In this way, the terminal may obtain a codebook $W_1^T$ of the TRP 1, where $W_1^T$ is a P*N$_f$ matrix, and is specifically

$$W_1^T = \boldsymbol{W}_{1,1}\boldsymbol{W}_{2,1}\boldsymbol{W}_{1,f}^H$$ ; a codebook $W_2^T$ of the TRP 2, where $W_2^T$ is a P*N$_f$ matrix, and is specifically

$$W_2^T = \boldsymbol{W}_{1,2}\boldsymbol{W}_{2,2}\boldsymbol{W}_{2,f}^H$$ ; and a codebook $W_3^T$ of the TRP 2, where $W_3^T$ is a P*N$_f$ matrix, and is specifically

$$W_3^T = \boldsymbol{W}_{1,3}\boldsymbol{W}_{2,3}\boldsymbol{W}_{3,f}^H$$ . The terminal may report indication information of a multi-station coordinated codebook including the three TRP codebooks, for example, an indication that $W = [W_1^T, W_2^T, W_3^T]^T$ , where W is a 3P*N$_f$ matrix, that is, report joint CSI information of the three TRPs. Correspondingly, the base station may reconstruct, based on the joint CSI information reported by the terminal, channels or precoding corresponding to the three TRPs.

It should be noted that, to complete multi-station coordinated codebook design, different TRPs further need to be indicated. For example, different TRPs send different CSI-RSs to the terminal for downlink channel measurement, and indexes of the different CSI-RSs may indicate different TRPs. Alternatively, an antenna port corresponding to each CSI-RS may be considered as one antenna port group, each antenna port group corresponds to one TRP, and indexes of different antenna port groups may indicate different TRPs. For another example, a plurality of TRPs in a coordinated cluster use a same CSI-RS, different TRPs use different antenna ports on a same CSI-RS resource, and an antenna port allocated to each TRP is considered as one antenna port group. In this way, indexes of different antenna port groups may indicate different TRPs. For still another example, a plurality of TRPs in a coordinated cluster use a plurality of CSI-RSs, different TRPs use different antenna ports on a same CSI-RS resource, or different TRPs use a same antenna port or different antenna ports on different CSI-RS resources, and an antenna port allocated to each TRP is considered as one antenna port group. In this way, indexes of different antenna port groups may represent different TRPs.

However, in a multi-frequency multi-station scenario, joint design of multi-frequency codebooks and multi-station codebooks, that is, joint design of multi-frequency multi-station codebooks, needs to be considered. In this case, the terminal needs to distinguish between different frequency bands of a same TRP and a plurality of TRPs corresponding to a same frequency band. Apparently, the foregoing multi-station coordinated codebook cannot distinguish between different frequency bands of a same TRP, and cannot be applied to a multi-frequency multi-station joint design scenario.

Next, this application describes a single-station codebook operating on a plurality of frequency bands. The codebook in this case may also be referred to as a single-station multi-frequency coordinated codebook. An FDD system is used as an example. Because channels on different frequency bands are different, different precoding needs to be designed for different frequency bands to send data to a same user on a plurality of frequency bands. However, an existing codebook system is mainly designed for a single TRP on a single frequency band or a plurality of TRPs on a single frequency band. Although two frequency bands may be considered as two completely independent cells, to separately design codebooks, the terminal needs to feed back one piece of CSI for each frequency band, resulting in large feedback overheads. In an implementation process of an existing product, adjacent frequency bands may share an antenna installation platform, and in this case, channels of two frequency bands are strongly correlated in space domain. Therefore, for a single-station multi-frequency scenario, joint design of single-station multi-frequency codebooks may be considered. For example, the two frequency bands may be represented by a common space domain base and a common frequency domain base, to effectively reduce feedback overheads. For a single-station multi-frequency codebook, different frequency bands may be further configured to correspond to different cell identifiers (identity, ID). The terminal may distinguish between different frequency bands based on different cell IDs, to implement feedback of the single-station multi-frequency codebook.

However, in a multi-frequency multi-station scenario, a plurality of TRPs may also correspond to a same frequency band, that is, correspond to a same cell ID. Apparently, the foregoing single-station multi-frequency codebook cannot distinguish between a plurality of TRPs corresponding to a same frequency band, and cannot be applied to a multi-frequency multi-station joint design scenario.

In conclusion, for the foregoing technical problems, embodiments of this application provide the following technical solutions, to implement joint design of codebooks of a plurality of TRPs on a plurality of frequency bands. The following describes the technical solutions of this application with reference to the accompanying drawings.

The technical solutions in embodiments of this application are applicable to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "information (information)", "signal (signal)", "message (message)", "channel (channel)", and "signaling (signaling)" may be interchangeably used sometimes. It should be noted that meanings expressed by the terms are consistent when differences of the terms are not emphasized. The terms "of (of)", "corresponding relevant (corresponding, relevant)", and "corresponding (corresponding)" may sometimes be interchangeably used. It should be noted that meanings expressed by the terms are consistent when differences of the terms are not emphasized. In addition, "/" mentioned in this application may represent an "or" relationship.

The network architecture and the service scenario that are described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

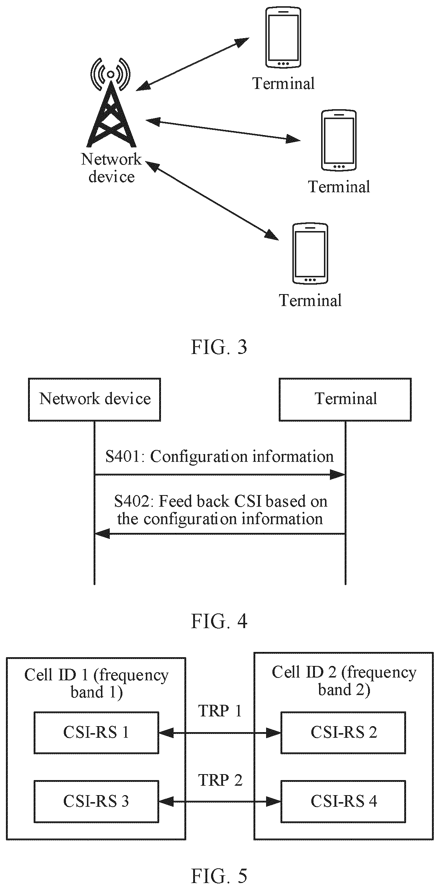

For ease of understanding of embodiments of this application, a communication system to which embodiments of this application are applicable is first described in detail by using a communication system shown in FIG. 3 as an example. For example, FIG. 3 is a diagram of an architecture of a communication system to which a channel state information feedback method according to an embodiment of this application is applicable.

As shown in FIG. 3, the communication system includes a terminal and a network device.

The terminal is a terminal that accesses a network and has a wireless transceiver function, or a chip or a chip system that may be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in this embodiment of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handset (handset), a laptop computer (laptop computer), a machine type communications (machine type communications, MTC) terminal, a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units.

The network device, for example, an access network device, is a device that is located on a network side of the communication system and has a wireless transceiver function, or a chip or a chip system that may be disposed in the device. The network device may be a next-generation mobile communication system, for example, a 6G access network device, for example, a 6G base station or a 6G core network element. Alternatively, in the next-generation mobile communication system, the network device may be named in another manner, which falls within the protection scope of embodiments of this application. This is not limited in this application. In addition, the network device may alternatively include a gNB in 5G such as an NR system, or one antenna panel or a group of antenna panels (including a plurality of antenna panels) of a base station in 5G; or may be a network node that forms a gNB, a transmission point (transmission and reception point, TRP, or transmission point, TP), or a transmission measurement function (transmission measurement function, TMF), for example, a baseband unit (BBU), a CU, a DU, a road side unit (road side unit, RSU) having a base station function, or a wired access gateway. In addition, the network device may alternatively be an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like.

Specifically, in a multi-frequency multi-station scenario, the network device may include a plurality of TRPs, and each TRP in the plurality of TRPs may operate on (in other words, may be associated with) a plurality of frequency bands. For example, the plurality of TRPs may be associated with a first frequency band, that is, the plurality of TRPs may exchange data with the terminal on the first frequency band. At least one TRP in the plurality of TRPs may be further associated with a frequency band different from the first frequency band, for example, a second frequency band. In other words, the at least one TRP may further exchange data with the terminal on the second frequency band. Certainly, the at least one TRP in the plurality of TRPs may also be associated with any other possible frequency band, for example, a third frequency band. This is not limited in this application. In addition, the frequency band mentioned in this application may be an operating bandwidth configured by the network device for the terminal, for example, a bandwidth part (bandwidth part, BWP). This is not limited in this application.

On this basis, the network device may provide an association relationship between the plurality of TRPs and the plurality of frequency bands for the terminal. Correspondingly, in a CSI feedback process, the terminal may feed back CSI corresponding to the plurality of TRPs on each frequency band to the network device based on the association relationship, so that the network device determines a corresponding downlink channel matrix or precoding matrix based on the CSI, implementing joint design of codebooks in the multi-frequency multi-station scenario.

The foregoing describes an overall concept of embodiments of this application by using the communication system. The following describes specific implementation of embodiments of this application by using a channel state information feedback method.

For example, FIG. 4 is a schematic flowchart of a channel state information feedback method according to an embodiment of this application. The channel state information feedback method is applicable to communication between a terminal and a network device in the foregoing communication system. As shown in FIG. 4, a procedure of the channel state information feedback method is specifically as follows.

S401: The network device sends configuration information to the terminal. Correspondingly, the terminal receives the configuration information from the network device.

The configuration information may be carried in radio resource control (radio resource control, RRC) signaling or any other possible signaling. This is not limited. The configuration information may indicate an association relationship between a plurality of TRPs and a plurality of frequency bands in a network. The plurality of TRPs may be TRPs associated with the network device, for example, TRPs in the network device, or TRPs managed by the network device. The configuration information may indicate that the plurality of TRPs are associated with a first frequency band, and at least one TRP in the plurality of TRPs is further associated with a second frequency band. The first frequency band and the second frequency band are different frequency bands. Certainly, the configuration information may further indicate that the at least one TRP in the plurality of TRPs is also associated with another frequency band, for example, a third frequency band or a fourth frequency band. This is not limited in this application. The following provides detailed descriptions.

Implementation 1:

Because one cell (cell) identity, for example, a cell ID, may correspond to a TRP on one frequency band, different cell identities may be used to distinguish between a plurality of TRPs on a plurality of frequency bands. Because the plurality of TRPs also correspond to a plurality of frequency bands, different cell identities may also be used to distinguish between the plurality of frequency bands. Because a plurality of TRPs on a same frequency band usually correspond to different reference signal resources, for example, channel state information-reference signals (channel state information-reference signals, CSI-RSs), or are configured to use different CSI-RSs, different reference signal resources may be used to distinguish between the plurality of TRPs on a same frequency band. On this basis, the configuration information may indicate an association relationship between a plurality of reference signal resources and a plurality of cell identities, to implicitly indicate the association relationship between the plurality of TRPs and the plurality of frequency bands. For example, a first cell identifier is associated with the first frequency band, and a first reference signal resource set includes a reference signal resource used by the plurality of TRPs. Therefore, the configuration information may indicate an association between the first cell identifier and the first reference signal resource set, including, for example, an association relationship between the first cell identifier and an index of a plurality of reference signal resources in the first reference signal resource set, to indicate that the plurality of TRPs are associated with the first frequency band. A second cell identifier is associated with the second frequency band, and a second reference signal resource set includes a reference signal resource used by the at least one TRP in the plurality of TRPs. Therefore, the configuration information may further indicate an association between the second cell identifier and the second reference signal resource set, including, for example, an association relationship between the second cell identifier and an index of at least one reference signal resource in the second reference signal resource set, to implicitly indicate that the second frequency band is associated with the at least one TRP in the plurality of TRPs.

For example, as shown in FIG. 5, CSI-RSs configured to be used by a TRP 1 include a CSI-RS 1 and a CSI-RS 3, and CSI-RSs configured to be used by a TRP 2 include a CSI-RS 2 and a CSI-RS 4. A cell ID 1 is associated with a frequency band 1, and a cell ID 2 is associated with a frequency band 2. On this basis, the configuration information may include the cell ID 1 (CSI-RS 1, CSI-RS 2) and the cell ID 2 (CSI-RS 3, CSI-RS 4), indicating that the TRP 1 and the TRP 2 are associated with the frequency band 1, and the TRP 1 and the TRP 2 are further associated with the frequency band 2, so that the terminal can perform joint design of multi-frequency multi-station codebooks based on an indication.

Implementation 2:

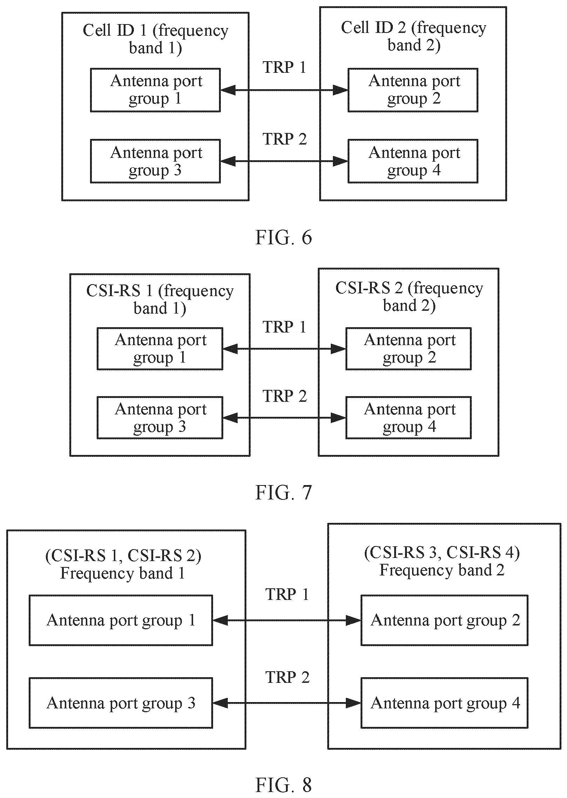

Similar to implementation 1, different cell identities may also be used to distinguish between a plurality of frequency bands. In addition, because a plurality of TRPs on a same frequency band usually correspond to different antenna port groups, or are configured to use different antenna port groups, different antenna port groups may be used to distinguish between the plurality of TRPs on a same frequency band. On this basis, the configuration information may indicate an association relationship between a plurality of antenna port groups and a plurality of cell identities, to indicate the association relationship between the plurality of TRPs and the plurality of frequency bands. For example, the first cell identifier is associated with the first frequency band, and a first antenna port group set includes a plurality of antenna port groups used by the plurality of TRPs. Therefore, the configuration information may indicate an association between the first cell identifier and the first antenna port group set, including, for example, an association relationship between the first cell identifier and an index of the plurality of antenna port groups in the first antenna port group set, to implicitly indicate that the plurality of TRPs are associated with the first frequency band. The second cell identifier is associated with the second frequency band, and a second antenna port group set includes an antenna port group used by the at least one TRP in the plurality of TRPs. Therefore, the configuration information may further indicate an association between the second cell identifier and the second antenna port group set, including, for example, an association relationship between the second cell identifier and an index of at least one antenna port group in the second antenna port group set, to implicitly indicate that the second frequency band is associated with the at least one TRP.
For example, as shown in FIG. 6, antenna port groups configured to be used by a TRP 1 include an antenna port group 1 and an antenna port group 3, and antenna port groups configured to be used by a TRP 2 include an antenna port group 2 and an antenna port group 4. A cell ID 1 is associated with a frequency band 1, and a cell ID 2 is associated with a frequency band 2. On this basis, the configuration information may indicate the cell ID 1 (antenna port group 1, antenna port group 2) and the cell ID 2 (antenna port group 3, antenna port group 4), indicating that the TRP 1 and the TRP 2 are associated with the frequency band 1, and the TRP 1 and the TRP 2 are further associated with the frequency band 2, so that the terminal can perform joint design of multi-frequency multi-station codebooks based on an indication.

Implementation 3:

Because one reference signal resource may correspond to a TRP on one frequency band, different reference signal resources may be used to distinguish between a plurality of TRPs on a plurality of frequency bands. Because the plurality of TRPs also correspond to a plurality of frequency bands, the different reference signal resources may also be used to distinguish between the plurality of frequency bands. Similar to implementation 2, a plurality of TRPs on a same frequency band may alternatively be distinguished between by using different antenna port groups. On this basis, the configuration information may indicate an association relationship between a plurality of antenna port groups and a plurality of reference signal resources, to indicate the association relationship between the plurality of TRPs and the plurality of frequency bands. For example, a first reference signal resource is configured to be used on the first frequency band, and a first antenna port group set includes a plurality of antenna port groups used by the plurality of TRPs. The configuration information may specifically indicate an association between the first reference signal resource and the first antenna port group set, for example, include an association relationship between an index of the first reference signal resource and the index of the plurality of antenna port groups in the first antenna port group set, to implicitly indicate that the plurality of TRPs are associated with the first frequency band. A second reference signal resource is configured to be used on the second frequency band, and the second antenna port group set includes the antenna port group used by the at least one TRP in the plurality of TRPs. The configuration information further indicates an association between the second reference signal resource and the second antenna port group set, for example, include an association relationship between an index of the second reference signal resource and the index of the at least one antenna port group in the second antenna port group set, to implicitly indicate that the second frequency band is associated with the at least one TRP.
For example, as shown in FIG. 7, antenna port groups configured to be used by a TRP 1 include an antenna port group 1 and an antenna port group 3, and antenna port groups configured to be used by a TRP 2 include an antenna port group 2 and an antenna port group 4. A CSI-RS 1 is configured to be used on a frequency band 1, and a CSI-RS 2 is configured to be used on a frequency band 2. On this basis, the configuration information may indicate the CSI-RS 1 (antenna port group 1, antenna port group) and the CSI-RS 2 (antenna port group 3, antenna port group 4), indicating that the TRP 1 and the TRP 2 are associated with the frequency band 1, and the TRP 1 and the TRP 2 are further associated with the frequency band 2, so that the terminal can perform joint design of multi-frequency multi-station codebooks based on an indication.

Implementation 4:

Because one reference signal resource set may correspond to a TRP on one frequency band, different reference signal resource sets may be used to distinguish between a plurality of TRPs on a plurality of frequency bands. Because the plurality of TRPs also correspond to a plurality of frequency bands, different reference signal resource sets may also be used to distinguish between the plurality of frequency bands. Similar to implementation 2, different antenna port groups may also be used to distinguish between a plurality of TRPs on a same frequency band. On this basis, the configuration information may indicate an association relationship between a plurality of antenna port groups and a plurality of reference signal resource sets, to indicate the association relationship between the plurality of TRPs and the plurality of frequency bands. For example, the first reference signal resource set (including a plurality of reference signal resources) is configured to be used on the first frequency band, and the first antenna port group set includes the plurality of antenna port groups used by the plurality of TRPs. The configuration information may indicate an association between the first reference signal resource set and the first antenna port group set, including, for example, an association relationship between an index of the first reference signal resource set and the index of the plurality of antenna port groups in the first antenna port group set, or an association relationship between the index of the plurality of reference signal resources in the first reference signal resource set and the index of the plurality of antenna port groups in the first antenna port group set, to implicitly indicate that the plurality of TRPs are associated with the first frequency band. The second reference signal resource set (including a plurality of reference signal resources) is configured to be used on the second frequency band, and the second antenna port group set includes the antenna port group used by the at least one TRP in the plurality of TRPs. The configuration information may further indicate an association between the second reference signal resource set and the second antenna port group set, including, for example, an association relationship between an index of the second reference signal resource set and the index of the at least one antenna port group in the second antenna port group set, or an association relationship between an index of a plurality of reference signal resources in the second reference signal resource set and the index of the at least one antenna port group in the second antenna port group set, to implicitly indicate that the second frequency band is associated with the at least one TRP.

Example 3: As shown in FIG. 8, antenna port groups configured to be used by a TRP 1 include an antenna port group 1 and an antenna port group 3, and antenna port groups configured to be used by a TRP 2 include an antenna port group 2 and an antenna port group 4. A CSI-RS 1 and a CSI-RS 2 are configured to be used on a frequency band 1, and a CSI-RS 3 and a CSI-RS 4 are configured to be used on a frequency band 2. On this basis, the configuration information may indicate (CSI-RS 1, CSI-RS 2) (antenna port group 1, antenna port group), and (CSI-RS 3, CSI-RS 4) (antenna port group 3, antenna port group 4), indicating that the TRP 1 and the TRP 2 are associated with the frequency band 1, and the TRP 1 and the TRP 2 are further associated with the frequency band 2, so that the terminal can perform joint design of multi-frequency multi-station codebooks based on an indication.

It may be understood that a CSI-RS index is merely an example of this embodiment of this application, and may be replaced with any possible reference signal resource index, for example, a demodulation reference signal (demodulation reference signal, DMRS) index or a synchronization signal and PBCH block (synchronization signal and PBCH block, SSB) index. This is not limited. In addition, the foregoing implementation 1 to implementation 3 may alternatively be implemented in combination. For example, the configuration information may indicate an association relationship between the plurality of TRPs and different frequency bands in implementation 1, or may indicate an association relationship between the plurality of TRPs and different frequency bands in implementation 2. This is not limited herein.

In this embodiment of this application, a primary TRP in the plurality of TRPs may send the configuration information to the terminal, but this is not limited. For example, each TRP in the plurality of TRPs may send configuration information corresponding to the TRP to the terminal, and the configuration information corresponding to each TRP may indicate a frequency band associated with the TRP. In this way, the terminal may determine the association relationship between the plurality of TRPs and different frequency bands based on configuration information respectively corresponding to the plurality of TRPs.

S402: The terminal feeds back CSI to the network device based on the configuration information. Correspondingly, the network device receives the CSI fed back by the terminal based on the configuration information.

The CSI may include CSI corresponding to the plurality of TRPs on different frequency bands, for example, CSI corresponding to each TRP in the plurality of TRPs on the first frequency band, and CSI corresponding to each TRP in the at least one TRP on the second frequency band.

Specifically, the network device may send reference signals, for example, CSI-RSs, to the terminal at a preconfigured time-frequency location. Correspondingly, the terminal may receive these reference signals at the corresponding time-frequency location. The terminal may estimate a downlink channel based on the received reference signal, to obtain corresponding CSI, and feed back the CSI to the network device. For example, when a plurality of TRPs on a same frequency band provide services for the terminal by using CJT, the terminal may feed back one piece of CSI (denoted as first CSI) corresponding to the plurality of TRPs on the first frequency band, and one piece of CSI (denoted as second CSI) corresponding to the at least one TRP on the second frequency band to the network device based on the configuration information, for example, the plurality of TRPs are associated with the first frequency band. In this way, coherent joint transmission can be performed by the plurality of TRPs on a same frequency band in a multi-frequency multi-station scenario, thereby improving network system performance and reducing overheads.

The first CSI may include a space-frequency base corresponding to each TRP on the first frequency band, a non-zero combination coefficient corresponding to each TRP on the first frequency band, and an index of the non-zero combination coefficient corresponding to each TRP on the first frequency band.

The space-frequency base corresponding to each TRP on the first frequency band may indicate a space-frequency eigen-basis of a downlink channel corresponding to the TRP on the first frequency band, for example, may be the space domain base and the frequency domain base mentioned above, or may be the space-frequency joint eigen-basis mentioned above. Because antennas of one TRP associated with a plurality of frequency bands may share an antenna installation platform, correlation between space domain eigen-basiss of downlink channels of the TRP on the plurality of frequency bands is good. Therefore, space-frequency bases respectively corresponding to the TRP on the plurality of frequency bands may be at least partially the same, or at least some common subspace exists. For example, a space-frequency base corresponding to the TRP 1 on the frequency band 1 is [F1, F2], and a space-frequency base corresponding to the TRP 1 on the frequency band 2 is also [F 1, F2]. In other words, the two space-frequency bases are the same. For another example, a space-frequency base corresponding to the TRP 1 on the frequency band 1 is [F, F2], and a space-frequency base corresponding to the TRP 1 on the frequency band 2 is [F, F3]. F is a common space-frequency base in the two space-frequency bases.

When the space-frequency bases respectively corresponding to the TRP on the plurality of frequency bands are the same, the terminal may select a space-frequency base of the TRP on a frequency band (for example, the first frequency band) as a space-frequency base shared by the plurality of frequency bands. The terminal may feed back the shared space-frequency base by using CSI corresponding to the TRP on a frequency band (for example, the first frequency band). In other words, the CSI may include the shared space-frequency base, and CSI corresponding to the TPR on another frequency band (for example, the second frequency band) no longer includes the shared space-frequency base, to reduce communication overheads.

Alternatively, when the space-frequency bases respectively corresponding to the TRP on the plurality of frequency bands are partially the same, the terminal may still feed back a space-frequency base corresponding to the TRP on each frequency band, that is, a plurality of space-frequency bases to the network device. For example, the terminal may feed back, by using CSI corresponding to the TRP on each frequency band, a space-frequency base corresponding to the TRP on the frequency band.

The non-zero combination coefficient corresponding to each TRP on the first frequency band may be a preset number of non-zero coefficients selected in descending order of amplitude values from non-zero coefficients obtained by projecting a downlink channel matrix or a precoding matrix corresponding to the TRP on the first frequency band onto a space-frequency base of the TRP. The preset number may be determined by the terminal based on an indication of the network device, and is not limited. The non-zero combination coefficient corresponding to each TRP on the first frequency band may indicate a weight occupied by each component in the space-frequency base corresponding to the TRP on the first frequency band. The non-zero combination coefficient corresponding to each TRP on the first frequency band may be a non-zero coefficient in the combination coefficient quantized according to the quantization criterion mentioned above, or may be a non-zero coefficient in the short-periodicity combination coefficient mentioned above. The index of the non-zero combination coefficient corresponding to each TRP on the first frequency band may indicate a location of the non-zero combination coefficient corresponding to the TRP on the first frequency band in the non-zero coefficients obtained by projecting the downlink channel matrix or the precoding matrix corresponding to the TRP on the first frequency band onto the space-frequency base of the TRP. The terminal may send the non-zero combination coefficient corresponding to each TRP on the first frequency band and the index of the non-zero combination coefficient corresponding to each TRP on the first frequency band to the plurality of TRPs or the primary TRP in the plurality of TRPs in a short-periodicity manner.

The second CSI may include a space-frequency base corresponding to each TRP on the second frequency band, a non-zero combination coefficient corresponding to each TRP on the second frequency band, and an index of the non-zero combination coefficient corresponding to each TRP on the second frequency band. For details, refer to related descriptions in the first CSI. Details are not described again.

For ease of understanding, the following uses a first TRP in a plurality of TRPs as an example for description.

The terminal may send at least one of a first space-frequency base of the first TRP and a second space-frequency base of the first TRP to the network device based on the configuration information. For example, the terminal may be associated with the first frequency band and the second frequency band based on the first TRP, and send at least one of the first space-frequency base and the second space-frequency base to the first TRP or the primary TRP in the plurality of TRPs. Correspondingly, the network device may receive at least one of the first space-frequency base of the first TRP and the second space-frequency base of the first TRP that are fed back by the terminal based on the configuration information.

The first space-frequency base may be a space-frequency base corresponding to the first TRP on the first frequency band, and the first space-frequency base may indicate a space-frequency eigen-basis of a downlink channel corresponding to the first TRP on the first frequency band. The second space-frequency base may be a space-frequency base corresponding to the first TRP on the second frequency band, and the second space-frequency base may indicate a space-frequency eigen-basis of a downlink channel corresponding to the first TRP on the second frequency band.

In a case, the first space-frequency base and the second space-frequency base may be the same. In other words, the first space-frequency base or the second space-frequency base may be used as a space-frequency base shared by the first TRP on the first frequency band and the second frequency band. For example, the terminal may determine the first space-frequency base, and use the first space-frequency base as the second space-frequency base. Alternatively, the terminal may determine the second space-frequency base, and use the second space-frequency base as the first space-frequency base. Alternatively, the terminal may determine an initial space-frequency base corresponding to the first TRP on the first frequency band and an initial space-frequency base corresponding to the first TRP on the second frequency band, and perform weighted summation on the two initial space-frequency bases. In this case, a space-frequency base obtained after the weighted summation may be used as the first space-frequency base and the second space-frequency base. Alternatively, the terminal may determine the first space-frequency base and the second space-frequency base in any other possible manner. This is not limited. The terminal may send the first space-frequency base or the second space-frequency base to the network device based on the configuration information. Correspondingly, the network device may receive the first space-frequency base or the second space-frequency base that is fed back by the terminal based on the configuration information.

Alternatively, in another case, the first space-frequency base and the second space-frequency base may be partially the same, or at least some common subspace exists. For example, the terminal may determine an initial space-frequency base corresponding to the first TRP on the first frequency band and an initial space-frequency base corresponding to the first TRP on the second frequency band, and perform weighted summation on some space-frequency bases at a same location in the two initial space-frequency bases, to serve as a common space-frequency base. In this case, the first space-frequency base includes some space-frequency bases that are in the initial space-frequency base corresponding to the first TRP on the first frequency band and on which no weighted summation is performed, and the common space-frequency base. The second space-frequency base includes some space-frequency bases that are in the initial space-frequency base corresponding to the first TRP on the second frequency band and on which no weighted summation is performed, and the common space-frequency base. Alternatively, the terminal may determine the first space-frequency base and the second space-frequency base in any other possible manner. This is not limited. The terminal may send the first space-frequency base and the second space-frequency base to the network device based on the configuration information. The network device receives the first space-frequency base and the second space-frequency base that are fed back by the terminal based on the configuration information.

The terminal may further send a first non-zero combination coefficient of the first TRP and an index of the first non-zero combination coefficient to the network device based on the configuration information. For example, the terminal may be associated with the first frequency band based on the first TRP, and send the first non-zero combination coefficient and the index of the first non-zero combination coefficient to the first TRP or the primary TRP in the plurality of TRPs. The first non-zero combination coefficient may be a preset number of non-zero coefficients selected in descending order of amplitude values from non-zero coefficients obtained by projecting a downlink channel matrix or a precoding matrix corresponding to the first TRP on the first frequency band onto the first space-frequency base. The preset number may be determined based on an indication of the network device. The first non-zero combination coefficient may indicate a weight occupied by each component in the first space-frequency base. Similarly, the terminal may further send a second non-zero combination coefficient of the first TRP and an index of the second non-zero combination coefficient to the network device based on the configuration information. For example, the terminal may be associated with the second frequency band based on the first TRP, and send the second non-zero combination coefficient and the index of the second non-zero combination coefficient to the first TRP or the primary TRP in the plurality of TRPs. The second non-zero combination coefficient may be a preset number of non-zero coefficients selected in descending order of amplitude values from non-zero coefficients obtained by projecting a downlink channel matrix or a precoding matrix corresponding to the first TRP on the second frequency band onto the second space-frequency base. The preset number may be determined based on an indication of the network device. The second non-zero combination coefficient may indicate a weight occupied by each component in the second space-frequency base.

It may be understood that the first non-zero combination coefficient and the index of the first non-zero combination coefficient, and the second non-zero combination coefficient and the index of the second non-zero combination coefficient may be fed back by using different CSI. For example, the first non-zero combination coefficient and the index of the first non-zero combination coefficient may be fed back by using the first CSI, or may be included in the first CSI. The second non-zero combination coefficient and the index of the second non-zero combination coefficient may be fed back by using the second CSI, or may be included in the second CSI.

In this embodiment of this application, after the network device receives the first CSI, because the network device knows in advance a number of all combination coefficients corresponding to each TRP on the first frequency band, the network device may determine, by using an index of a non-zero combination coefficient that is of each TRP on the first frequency band and that is in the first CSI, a combination coefficient that is not reported by the terminal, that is, a combination coefficient that is not selected by the terminal, and consider that a value of the combination coefficient is 0 by default. In this way, the network device may obtain all the combination coefficients corresponding to each TRP on the first frequency band. The network device may restore, based on a space-frequency base of each TRP on the first frequency band and all non-zero combination coefficients corresponding to each TRP on the first frequency band, a downlink channel or precoding corresponding to each TRP on the first frequency band. Similarly, after receiving the second CSI, the network device may also perform processing similar to that of the first CSI. Reference may be made for understanding. Details are not described again.

In conclusion, in a scenario in which a plurality of TRPs are on a plurality of frequency bands, the configuration information indicates an association relationship between the plurality of frequency bands and the plurality of TRPs, for example, the first frequency band is associated with the plurality of TRPs, and at least one TRP in the plurality of TRPs is further associated with the second frequency band. In this way, the terminal can feed back, in a targeted manner, CSI corresponding to the plurality of TRPs associated with each frequency band by using coherent joint transmission, for example, CSI corresponding to the plurality of TRPs on the first frequency band, and CSI corresponding to the at least one TRP on the second frequency band, to implement joint design of codebooks of the plurality of TRPs on the plurality of frequency bands.

With reference to the foregoing embodiment, in a possible design solution, when feeding back a space-frequency base to the network device, the terminal may further feed back, to the network device, an index of a reference signal resource or an index of an antenna port group corresponding to the space-frequency base, to indicate that the space-frequency base is a space-frequency base of a specific TRP on a specific frequency band. When a plurality of frequency bands share a space-frequency base, the space-frequency base may correspond to a plurality of indexes of the reference signal resource or a plurality of indexes of the antenna port group, to indicate that the space-frequency base is a space-frequency base shared by a specified TRP on the plurality of frequency bands. In addition, each space-frequency base and an index of a reference signal resource or an index of an antenna port group corresponding to the space-frequency base may be fed back together, or may be fed back separately. This is not limited.

The first TRP is used as an example. When the index of the first reference signal resource and the index of the second reference signal resource indicate the first TRP, the terminal may further feed back, on the first frequency band or the second frequency band, an index of the first reference signal resource and an index of the second reference signal resource that correspond to the first space-frequency base to the first TRP or the primary TRP in the plurality of TRPs, to indicate that the first space-frequency base is a space-frequency base shared by the first TRP on the first frequency band and the second frequency band. Alternatively, when an index of a first antenna port group and an index of a second antenna port group indicate the first TRP, the terminal may feed back, on the first frequency band or the second frequency band, an index of the first antenna port group and an index of the second antenna port group that correspond to the first space-frequency base to the first TRP or the primary TRP in the plurality of TRPs, to indicate that the first space-frequency base is a space-frequency base shared by the first TRP on the first frequency band and the second frequency band. Alternatively, the terminal may feed back the index of the reference signal resource or the index of the antenna port group corresponding to the second space-frequency base to the network device on the first frequency band or the second frequency band. Details are not described again.

With reference to the foregoing embodiment, in a possible design solution, the configuration information may further indicate the plurality of TRPs to perform joint design and feedback of codebooks. That the plurality of TRPs perform joint design and feedback of the codebooks may mean that a plurality of TRPs on a same frequency band use CJT. In other words, the plurality of TRPs on a same frequency band provide services for the terminal in a CJT manner. In addition, that the plurality of TRPs perform joint design and feedback of the codebooks may further mean that one TRP that is in the plurality of TRPs and that corresponds to a plurality of frequency bands shares a space-frequency base on the plurality of frequency bands. In this way, the terminal may perform joint design and feedback of the codebooks for the plurality of TRPs based on an indication of the configuration information, that is, perform the foregoing method. Certainly, the configuration information may alternatively not indicate the plurality of TRPs to perform joint design and feedback of codebooks. In this case, the terminal may perform joint design and feedback of the codebooks for the plurality of TRPs by default.

With reference to the foregoing embodiment, in a possible design solution, considering that in a scenario of sharing an antenna installation platform, correlation between combination coefficients of a same TRP on different frequency bands is good, for example, an energy proportion difference between combination coefficients of a same TRP on different frequency bands is not large, numbers of combination coefficients of the same TRP on different frequency bands are the same. For example, the numbers of combination coefficients of the TRP on different frequency bands are configured or defaulted as a preset number, to reduce solution complexity and implementation difficulty.

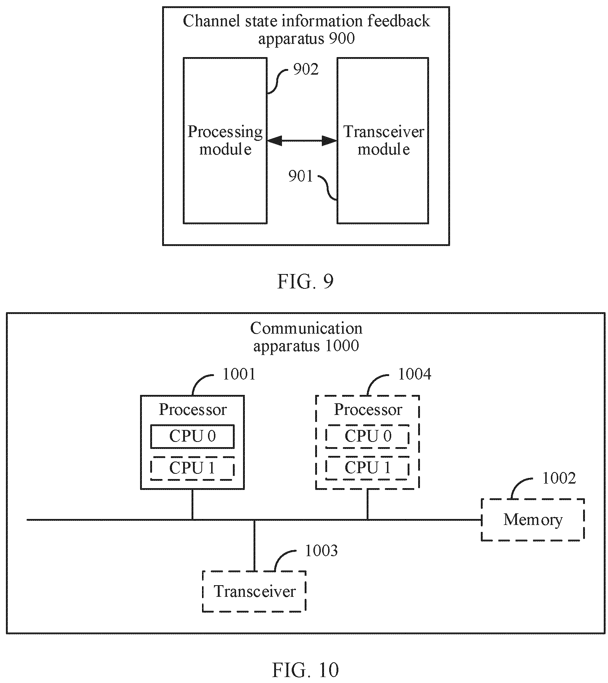

The channel state information feedback methods provided in embodiments of this application are described above in detail with reference to FIG. 4 to FIG. 8. Apparatuses configured to perform the channel state information feedback method according to embodiments of this application are described below in detail with reference to FIG. 9 and FIG. 10.

For example, FIG. 9 is a diagram of a structure of a channel state information feedback apparatus according to an embodiment of this application. As shown in FIG. 9, the apparatus 900 is applicable to the communication system shown in FIG. 3, and includes modules configured to perform the method shown in FIG. 4, such as a transceiver module 901 and a processing module 902. For ease of description, FIG. 9 shows only main components of the apparatus.

In some embodiments, the apparatus 900 may perform a function of the terminal shown in FIG. 4.

The transceiver module 901 is configured to receive configuration information from a network device. The processing module 902 is configured to control, based on the configuration information, the transceiver module 901 to feed back CSI to the network device. The configuration information indicates that a plurality of TRPs are associated with a first frequency band, at least one TRP in the plurality of TRPs is further associated with a second frequency band, and the plurality of TRPs are TRPs associated with the network device. The CSI includes CSI corresponding to each TRP in the plurality of TRPs on the first frequency band, and CSI corresponding to each TRP in the at least one TRP on the second frequency band.

In a possible design solution, the configuration information indicates that a first cell identifier is associated with a first reference signal resource set, and a second cell identifier is associated with a second reference signal resource set, where the first cell identifier is associated with the first frequency band, the second cell identifier is associated with the second frequency band, the first reference signal resource set includes a reference signal resource used by the plurality of TRPs, and the second reference signal resource set includes a reference signal resource used by the at least one TRP.

In a possible design solution, the configuration information indicates that a first cell identifier is associated with a first antenna port group set, and a second cell identifier is associated with a second antenna port group set, where the first cell identifier is associated with the first frequency band, the second cell identifier is associated with the second frequency band, the first antenna port group set includes a plurality of antenna port groups used by the plurality of TRPs, and the second antenna port group set includes an antenna port group used by the at least one TRP.

In a possible design solution, the configuration information indicates that a first reference signal resource is associated with a first antenna port group set, and a second reference signal resource is associated with a second antenna port group set, where the first reference signal resource is configured for use on the first frequency band, the second reference signal resource is configured for use on the second frequency band, the first antenna port group set includes a plurality of antenna port groups used by the plurality of TRPs, and the second antenna port group set includes an antenna port group used by the at least one TRP.

Alternatively, the configuration information indicates that the first reference signal resource set is associated with a first antenna port group set, and the second reference signal resource set is associated with a second antenna port group set, where the first reference signal resource set is configured for use on the first frequency band, the second reference signal resource set is configured for use on the second frequency band, the first antenna port group set includes a plurality of antenna port groups used by the plurality of TRPs, and the second antenna port group set includes an antenna port group used by the at least one TRP.

In a possible design solution, the at least one TRP includes a first TRP, and the processing module 902 is further configured to control the transceiver module 901 to feed back at least one of a first space-frequency base of the first TRP and a second space-frequency base of the first TRP to the network device based on the configuration information, where the first space-frequency base indicates a space-frequency eigen-basis of a downlink channel corresponding to the first TRP on the first frequency band, and the second space-frequency base indicates a space-frequency eigen-basis of a downlink channel corresponding to the first TRP on the second frequency band.

Optionally, when the first space-frequency base is the same as the second space-frequency base, the processing module 902 is further configured to control the transceiver module 901 to feed back the first space-frequency base or the second space-frequency base to the network device; or when the first space-frequency base is partially the same as the second space-frequency base, the processing module 902 is further configured to control the transceiver module 901 to feed back the first space-frequency base and the second space-frequency base to the network device. Optionally, that the first space-frequency base is partially the same as the second space-frequency base may also be understood as that some common subspace exists.

Optionally, the processing module 902 is further configured to control the transceiver module 901 to feed back a first non-zero combination coefficient and a second non-zero combination coefficient to the network device based on the configuration information, where the first non-zero combination coefficient is a non-zero coefficient obtained by projecting a downlink channel matrix or a precoding matrix corresponding to the first TRP on the first frequency band onto the first space-frequency base, and the second non-zero combination coefficient is a non-zero coefficient obtained by projecting a downlink channel matrix or a precoding matrix corresponding to the first TRP on the second frequency band onto the second space-frequency base.

In a possible design solution, when the plurality of TRPs on a same frequency band use coherent joint transmission CJT, the plurality of TRPs correspond to one piece of CSI on the first frequency band; or when the plurality of TRPs on a same frequency band use CJT, and the at least one TRP includes a plurality of TRPs, the at least one TRP corresponds to one piece of CSI on the second frequency band.

In a possible design solution, the configuration information further indicates the plurality of TRPs to perform joint design and feedback of codebooks. That the plurality of TRPs perform joint design and feedback of the codebooks means that the plurality of TRPs on a same frequency band use CJT, and one TRP that is in the plurality of TRPs and that corresponds to a plurality of frequency bands shares a space-frequency base on the plurality of frequency bands.

Optionally, the transceiver module 901 may include a sending module (not shown in FIG. 9) and a receiving module (not shown in FIG. 9). The sending module is configured to implement a sending function of the apparatus 900, and the receiving module is configured to implement a receiving function of the apparatus 900.

Optionally, the apparatus 900 may further include a storage module (not shown in FIG. 9). The storage module stores a program or instructions. When the processing module 902 executes the program or the instructions, the apparatus 900 may perform a function of the terminal in the channel state information feedback method shown in FIG. 4.

It should be noted that the apparatus 900 may be a terminal, may be a chip (system) or another part or component that may be disposed in the terminal, or may be an apparatus including the terminal. This is not limited in this application.

In addition, for technical effects of the apparatus 900, refer to the technical effects of the channel state information feedback method shown in FIG. 4. Details are not described herein again.

In some other embodiments, the apparatus 900 may perform a function of the network device shown in FIG. 4.

The processing module 902 is configured to control the transceiver module 901 to send configuration information of the apparatus 900 to a terminal. The transceiver module 901 is configured to receive CSI fed back by the terminal based on configuration information. The configuration information indicates that a plurality of TRPs are associated with a first frequency band, at least one TRP in the plurality of TRPs is further associated with a second frequency band, and the plurality of TRPs are TRPs associated with the apparatus 900. The CSI includes CSI corresponding to each TRP in the plurality of TRPs on the first frequency band, and CSI corresponding to each TRP in the at least one TRP on the second frequency band.

In a possible design solution, the configuration information indicates that a first cell identifier is associated with a first reference signal resource set, and a second cell identifier is associated with a second reference signal resource set, where the first cell identifier is associated with the first frequency band, the second cell identifier is associated with the second frequency band, the first reference signal resource set includes a reference signal resource used by the plurality of TRPs, and the second reference signal resource set includes a reference signal resource used by the at least one TRP.

In a possible design solution, the configuration information indicates that a first cell identifier is associated with a first antenna port group set, and a second cell identifier is associated with a second antenna port group set, where the first cell identifier is associated with the first frequency band, the second cell identifier is associated with the second frequency band, the first antenna port group set includes a plurality of antenna port groups used by the plurality of TRPs, and the second antenna port group set includes an antenna port group used by the at least one TRP.

In a possible design solution, the configuration information indicates that a first reference signal resource is associated with a first antenna port group set, and a second reference signal resource is associated with a second antenna port group set, where the first reference signal resource is configured for use on the first frequency band, the second reference signal resource is configured for use on the second frequency band, the first antenna port group set includes a plurality of antenna port groups used by the plurality of TRPs, and the second antenna port group set includes an antenna port group used by the at least one TRP.

Alternatively, the configuration information indicates that the first reference signal resource set is associated with a first antenna port group set, and the second reference signal resource set is associated with a second antenna port group set, where the first reference signal resource set is configured for use on the first frequency band, the second reference signal resource set is configured for use on the second frequency band, the first antenna port group set includes a plurality of antenna port groups used by the plurality of TRPs, and the second antenna port group set includes an antenna port group used by the at least one TRP.

In a possible design solution, the at least one TRP includes a first TRP, and the transceiver module 901 is configured to receive at least one of a first space-frequency base of the first TRP and a second space-frequency base of the first TRP that are fed back by the terminal based on the configuration information, where the first space-frequency base indicates a space-frequency eigen-basis of a downlink channel corresponding to the first TRP on the first frequency band, and the second space-frequency base indicates a space-frequency eigen-basis of a downlink channel corresponding to the first TRP on the second frequency band.

Optionally, when the first space-frequency base is the same as the second space-frequency base, the transceiver module 901 is configured to receive the first space-frequency base or the second space-frequency base that is fed back by the terminal based on the configuration information; or when the first space-frequency base is partially the same as the second space-frequency base, the transceiver module 901 is configured to receive the first space-frequency base and the second space-frequency base that are fed back by the terminal based on the configuration information. Optionally, that the first space-frequency base is partially the same as the second space-frequency base may also be understood as that some common subspace exists.

Optionally, the transceiver module 901 is configured to receive a first non-zero combination coefficient and a second non-zero combination coefficient that are fed back by the terminal based on the configuration information, where the first non-zero combination coefficient is a non-zero coefficient obtained by projecting a downlink channel matrix or a precoding matrix corresponding to the first TRP on the first frequency band onto the first space-frequency base, and the second non-zero combination coefficient is a non-zero coefficient obtained by projecting a downlink channel matrix or a precoding matrix corresponding to the first TRP on the second frequency band onto the second space-frequency base.

In a possible design solution, when the plurality of TRPs on a same frequency band use coherent joint transmission CJT, the plurality of TRPs correspond to one piece of CSI on the first frequency band; or when the plurality of TRPs on a same frequency band use CJT, and the at least one TRP includes a plurality of TRPs, the at least one TRP corresponds to one piece of CSI on the second frequency band.

In a possible design solution, the configuration information further indicates the plurality of TRPs to perform joint design and feedback of codebooks. That the plurality of TRPs perform joint design and feedback of the codebooks means that the plurality of TRPs on a same frequency band use CJT, and one TRP that is in the plurality of TRPs and that corresponds to a plurality of frequency bands shares a space-frequency base 90 on the plurality of frequency bands.

Optionally, the transceiver module 901 may include a sending module (not shown in FIG. 9) and a receiving module (not shown in FIG. 9). The sending module is configured to implement a sending function of the apparatus 900, and the receiving module is configured to implement a receiving function of the apparatus 900.

Optionally, the apparatus 900 may further include a storage module (not shown in FIG. 9). The storage module stores a program or instructions. When the processing module 902 executes the program or the instructions, the apparatus 900 may perform a function of the network device in the channel state information feedback method shown in FIG. 4.

It should be noted that the apparatus 900 may be a network device, may be a chip (system) or another part or component that may be disposed in the network device, or may be an apparatus including the network device. This is not limited in this application.

In addition, for technical effects of the apparatus 900, refer to the technical effects of the channel state information feedback method shown in FIG. 4. Details are not described herein again.

For example, FIG. 10 is a diagram 2 of a structure of a communication apparatus according to an embodiment of this application. For example, the communication apparatus may be a terminal, or may be a chip (system) or another part or component that may be disposed in the terminal. As shown in FIG. 10, the communication apparatus 1000 may include a processor 1001. Optionally, the communication apparatus 1000 may further include a memory 1002 and/or a transceiver 1003. The processor 1001 is coupled to the memory 1002 and the transceiver 1003, for example, may be connected through a communication bus.

The following describes components of the communication apparatus 1000 in detail with reference to FIG. 10.

The processor 1001 is a control center of the communication apparatus 1000, and may be a processor, or may be a generic term of a plurality of processing elements. For example, the processor 1001 is one or more central processing units (central processing units, CPUs), or may be an application-specific integrated circuit (application-specific integrated circuit, ASIC), or is configured as one or more integrated circuits that implement embodiments of this application, for example, one or more digital signal processors (digital signal processors, DSPs), or one or more field programmable gate arrays (field programmable gate arrays, FPGAs).

Optionally, the processor 1001 may perform various functions of the communication apparatus 1000 by running or executing a software program stored in the memory 1002 and invoking data stored in the memory 1002, for example, performing the channel state information feedback method shown in FIG. 4.

During specific implementation, in an embodiment, the processor 1001 may include one or more CPUs, for example, a CPU 0 and a CPU 1 shown in FIG. 10.

During specific implementation, in an embodiment, the communication apparatus 1000 may alternatively include a plurality of processors, for example, the processor 1001 and a processor 1004 in FIG. 10. Each of the processors may be a single-core processor (single-CPU), or may be a multi-core processor (multi-CPU). The processor herein may be one or more devices, circuits, and/or processing cores configured to process data (for example, computer program instructions).

The memory 1002 is configured to store a software program for executing the solutions of this application, and the processor 1001 controls execution of the software program. For specific implementation, refer to the foregoing method embodiments. Details are not described herein again.

Optionally, the memory 1002 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1002 may be integrated with the processor 1001, or may exist independently, and is coupled to the processor 1001 through an interface circuit (not shown in FIG. 10) of the communication apparatus 1000. This is not specifically limited in this embodiment of this application.

The transceiver 1003 is configured for communication with another communication apparatus. For example, the communication apparatus 1000 is a terminal, and the transceiver 1003 may be configured to communicate with a network device or communicate with another terminal device. For another example, the communication apparatus 1000 is a network device, and the transceiver 1003 may be configured to communicate with a terminal or communicate with another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently, and is coupled to the processor 1001 through an interface circuit (not shown in FIG. 10) of the communication apparatus 1000. This is not specifically limited in this embodiment of this application.

It needs to be noted that, the structure of the communication apparatus 1000 shown in FIG. 10 does not constitute a limitation on the communication apparatus. An actual communication apparatus may include more or fewer components than those shown in the figure, combine some components, or have different component arrangement.

In addition, for technical effects of the communication apparatus 1000, refer to the technical effects of the channel state information feedback method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When the software is used to implement embodiments, all or some of the foregoing embodiments may be implemented in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

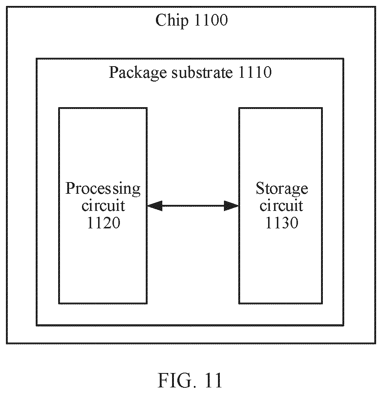

An embodiment of this application further provides a chip. FIG. 11 is a diagram of a structure of a chip according to an embodiment of this application. The chip 1100 may include a package substrate 1110 and a processing circuit 1120 disposed on the package substrate. The processing circuit 1120 may be configured to perform the method in the foregoing method embodiments. Optionally, the chip may further include a storage circuit 1130 disposed on the package substrate. The storage circuit 1130 may be configured to store computer instructions. When the processing circuit 1120 executes the instructions, the chip 1100 is enabled to perform the method in the foregoing method embodiments.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually represents an "or" relationship between the associated objects, but may also represent an "and/or" relationship. For details, refer to the context for understanding.

In this application, "at least one" means one or more, and "a plurality of" means two or more. "At least one item (piece) of the following" or a similar expression thereof means any combination of these items, including a singular item (piece) or any combination of plural items (pieces). For example, at least one item (piece) of a, b, or c may represent a, b, c, a and b, a and c, b and c, or a, b, and c, where a, b, and c each may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some eigen-bases may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A channel state information feedback method, wherein the method comprises:

   receiving, by a terminal, configuration information from a network device, wherein the configuration information indicates that a plurality of TRPs are associated with a first frequency band, at least one TRP in the plurality of TRPs is further associated with a second frequency band, and the plurality of TRPs are TRPs associated with the network device; and
   feeding back, by the terminal, channel state information CSI to the network device based on the configuration information, wherein the CSI comprises CSI corresponding to each TRP in the plurality of TRPs on the first frequency band, and CSI corresponding to each TRP in the at least one TRP on the second frequency band.

2. The method according to claim 1, wherein the configuration information indicates that a first cell identifier is associated with a first reference signal resource set, and a second cell identifier is associated with a second reference signal resource set, wherein the first cell identifier is associated with the first frequency band, the second cell identifier is associated with the second frequency band, the first reference signal resource set comprises a reference signal resource used by the plurality of TRPs, and the second reference signal resource set comprises a reference signal resource used by the at least one TRP.

3. The method according to claim 1, wherein the configuration information indicates that a first cell identifier is associated with a first antenna port group set, and a second cell identifier is associated with a second antenna port group set, wherein the first cell identifier is associated with the first frequency band, the second cell identifier is associated with the second frequency band, the first antenna port group set comprises a plurality of antenna port groups used by the plurality of TRPs, and the second antenna port group set comprises an antenna port group used by the at least one TRP.

4. The method according to claim 1, wherein the configuration information indicates that a first reference signal resource is associated with a first antenna port group set, and a second reference signal resource is associated with a second antenna port group set, wherein the first reference signal resource is configured for use on the first frequency band, the second reference signal resource is configured for use on the second frequency band, the first antenna port group set comprises a plurality of antenna port groups used by the plurality of TRPs, and the second antenna port group set comprises an antenna port group used by the at least one TRP.

5. The method according to any one of claims 1 to 4, wherein the at least one TRP comprises a first TRP, and the feeding back, by the terminal, CSI to the network device based on the configuration information comprises:
feeding back, by the terminal, at least one of a first space-frequency base of the first TRP and a second space-frequency base of the first TRP to the network device based on the configuration information, wherein the first space-frequency base indicates a space-frequency eigen-basis of a downlink channel corresponding to the first TRP on the first frequency band, and the second space-frequency base indicates a space-frequency eigen-basis of a downlink channel corresponding to the first TRP on the second frequency band.

6. The method according to claim 5, wherein when the first space-frequency base is the same as the second space-frequency base, the terminal feeds back the first space-frequency base or the second space-frequency base to the network device; or when the first space-frequency base is partially the same as the second space-frequency base, the terminal feeds back the first space-frequency base and the second space-frequency base to the network device.

7. The method according to claim 5 or 6, wherein the feeding back, by the terminal, CSI to the network device based on the configuration information further comprises:
feeding back, by the terminal, a first non-zero combination coefficient and a second non-zero combination coefficient to the network device based on the configuration information, wherein the first non-zero combination coefficient is a preset number of non-zero coefficients selected in descending order of amplitude values from non-zero coefficients obtained by projecting a downlink channel matrix or a precoding matrix corresponding to the first TRP on the first frequency band onto the first space-frequency base, and the second non-zero combination coefficient is a preset number of non-zero coefficients selected in descending order of amplitude values from non-zero coefficients obtained by projecting a downlink channel matrix or a precoding matrix corresponding to the first TRP on the second frequency band onto the second space-frequency base.

8. The method according to any one of claims 1 to 7, wherein when the plurality of TRPs on a same frequency band provide services for the terminal by using coherent joint transmission CJT, the plurality of TRPs correspond to one piece of CSI on the first frequency band, and the at least one TRP corresponds to one piece of CSI on the second frequency band.

9. The method according to any one of claims 1 to 8, wherein the configuration information further indicates the plurality of TRPs to perform joint design and feedback of codebooks, and that the plurality of TRPs perform joint design and feedback of the codebooks means that the plurality of TRPs on a same frequency band use CJT, and one TRP that is in the plurality of TRPs and that corresponds to a plurality of frequency bands shares a space-frequency base on the plurality of frequency bands.

10. A channel state information feedback method, wherein the method comprises:

sending, by a network device, configuration information of the network device to a terminal, wherein the configuration information indicates that a plurality of TRPs are associated with a first frequency band, at least one TRP in the plurality of TRPs is further associated with a second frequency band, and the plurality of TRPs are TRPs associated with the network device; and

receiving, by the network device, channel state information CSI fed back by the terminal based on the configuration information, wherein the CSI comprises CSI corresponding to each TRP in the plurality of TRPs on the first frequency band, and CSI corresponding to each TRP in the at least one TRP on the second frequency band.

11. The method according to claim 10, wherein the configuration information indicates that a first cell identifier is associated with a first reference signal resource set, and a second cell identifier is associated with a second reference signal resource set, wherein the first cell identifier is associated with the first frequency band, the second cell identifier is associated with the second frequency band, the first reference signal resource set comprises a reference signal resource used by the plurality of TRPs, and the second reference signal resource set comprises a reference signal resource used by the at least one TRP.

12. The method according to claim 10, wherein the configuration information indicates that a first cell identifier is associated with a first antenna port group set, and a second cell identifier is associated with a second antenna port group set, wherein the first cell identifier is associated with the first frequency band, the second cell identifier is associated with the second frequency band, the first antenna port group set comprises a plurality of antenna port groups used by the plurality of TRPs, and the second antenna port group set comprises an antenna port group used by the at least one TRP.

13. The method according to claim 10, wherein the configuration information indicates that a first reference signal resource is associated with a first antenna port group set, and a second reference signal resource is associated with a second antenna port group set, wherein the first reference signal resource is configured for use on the first frequency band, the second reference signal resource is configured for use on the second frequency band, the first antenna port group set comprises a plurality of antenna port groups used by the plurality of TRPs, and the second antenna port group set comprises an antenna port group used by the at least one TRP.

14. The method according to any one of claims 10 to 13, wherein the at least one TRP comprises a first TRP, and the receiving, by the network device, CSI fed back by the terminal based on the configuration information comprises: receiving, by the network device, at least one of a first space-frequency base of the first TRP and a second space-frequency base of the first TRP that are fed back by the terminal based on the configuration information, wherein the first space-frequency base indicates a space-frequency eigen-basis of a downlink channel corresponding to the first TRP on the first frequency band, and the second space-frequency base indicates a space-frequency eigen-basis of a downlink channel corresponding to the first TRP on the second frequency band.

15. The method according to claim 14, wherein when the first space-frequency base is the same as the second space-frequency base, the network device receives the first space-frequency base or the second space-frequency base that is fed back by the terminal; or when the first space-frequency base is partially the same as the second space-frequency base, the network device receives the first space-frequency base and the second space-frequency base that are fed back by the terminal.

16. The method according to claim 14 or 15, wherein the receiving, by the network device, CSI fed back by the terminal based on the configuration information further comprises: receiving, by the network device, a first non-zero combination coefficient and a second non-zero combination coefficient that are fed back by the terminal based on the configuration information, wherein the first non-zero combination coefficient is a preset number of non-zero coefficients selected in descending order of amplitude values from non-zero coefficients obtained by projecting a downlink channel matrix or a precoding matrix corresponding to the first TRP on the first frequency band onto the first space-frequency base, and the second non-zero combination coefficient is a preset number of non-zero coefficients selected in descending order of amplitude values from non-zero coefficients obtained by projecting a downlink channel matrix or a precoding matrix corresponding to the first TRP on the second frequency band onto the second space-frequency base.

17. The method according to any one of claims 10 to 16, wherein when the plurality of TRPs on a same frequency band provide services for the terminal by using coherent joint transmission CJT, the plurality of TRPs correspond to one piece of CSI on the first frequency band, and the at least one TRP corresponds to one piece of CSI on the second frequency band.

18. The method according to any one of claims 10 to 17, wherein the configuration information further indicates the plurality of TRPs to perform joint design and feedback of codebooks, and that the plurality of TRPs perform joint design and feedback of the codebooks means that the plurality of TRPs on a same frequency band use CJT, and one TRP that is in the plurality of TRPs and that corresponds to a plurality of frequency bands shares a space-frequency base on the plurality of frequency bands.

19. A channel state information feedback apparatus, wherein the apparatus comprises a module configured to perform the method according to any one of claims 1 to 9.

20. A channel state information feedback apparatus, wherein the apparatus comprises a module configured to perform the method according to any one of claims 10 to 18.

21. A communication apparatus, wherein the communication apparatus comprises a processor, and the processor is configured to perform the method according to any one of claims 1 to 18.

22. The communication apparatus according to claim 21, wherein the communication apparatus is a chip.

23. A communication apparatus, wherein the communication apparatus comprises a processor and a memory, the memory is configured to store computer instructions, and when the processor executes the instructions, the communication apparatus is enabled to perform the method according to any one of claims 1 to 18.

24. The communication apparatus according to claim 23, wherein the communication apparatus is a chip.

25. A computer-readable storage medium, wherein the computer-readable storage medium comprises a computer program or instructions, and when the computer program or the instructions are run on a computer, the computer is enabled to perform the method according to any one of claims 1 to 18.

26. A computer program product, comprising a computer program or instructions, and when the computer program or the instructions are run on a computer, the computer is enabled to perform the method according to any one of claims 1 to 18.

Base station | Terminal

Configuration →

Pilot →

← CSI

Service data →

FIG. 1

$3P*N_f$

$W$

$P*N_f$

$W_1^T$

$\approx$

$P*2L_2$

$W_{1,1}$

$2L_2*M_1$

$W_{2,1}$

$M_1*N_f$

$W_{1,f}^H$

$P*N_f$

$W_2^T$

$\approx$

$P*2L_2$

$W_{1,2}$

$2L_2*M_2$

$W_{2,2}$

$M_2*N_f$

$W_{2,f}^H$

$P*N_f$

$W_3^T$

$\approx$

$P*2L_2$

$W_{1,3}$

$2L_2*M_3$

$W_{2,3}$

$M_3*N_f$

$W_{3,f}^H$

FIG. 2

FIG. 3

FIG. 4

FIG. 5

Cell ID 1 (frequency band 1)

Antenna port group 1

TRP 1

Cell ID 2 (frequency band 2)

Antenna port group 2

Antenna port group 3

TRP 2

Antenna port group 4

FIG. 6

CSI-RS 1 (frequency band 1)

Antenna port group 1

TRP 1

CSI-RS 2 (frequency band 2)

Antenna port group 2

Antenna port group 3

TRP 2

Antenna port group 4

FIG. 7

(CSI-RS 1, CSI-RS 2) Frequency band 1

Antenna port group 1

TRP 1

(CSI-RS 3, CSI-RS 4) Frequency band 2

Antenna port group 2

Antenna port group 3

TRP 2

Antenna port group 4

FIG. 8

Channel state information feedback
apparatus 900

902

Processing
module

Transceiver
module

901

FIG. 9

Communication
apparatus 1000

1001

Processor

CPU 0

CPU 1

1004

Processor

CPU 0

CPU 1

1002

Memory

1003

Transceiver

FIG. 10

Chip 1100

Package substrate 1110

Processing
circuit
1120

⬌

Storage
circuit
1130

FIG. 11

## INTERNATIONAL SEARCH REPORT

| International application No. |
| --- |
| **PCT/CN2023/103472** |

| A. | CLASSIFICATION OF SUBJECT MATTER |
| --- | --- |

H04W72/04(2023.01)i; H04B 7/0456(2017.01)i

According to International Patent Classification (IPC) or to both national classification and IPC

| B. | FIELDS SEARCHED |
| --- | --- |

Minimum documentation searched (classification system followed by classification symbols)

IPC: H04W, H04B

Documentation searched other than minimum documentation to the extent that such documents are included in the fields searched

Electronic data base consulted during the international search (name of data base and, where practicable, search terms used)

CNABS, CNTXT, ENTXTC, DWPI, CNKI, 3GPP: TRP, 频段, 频率, CSI, 反馈, 第一, 第二, frequence, feedback, first, second

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| A | US 2022224482 A1 (LG ELECTRONICS INC.) 14 July 2022 (2022-07-14) description, paragraphs 212-487 | 1-26 |
| A | CN 114600524 A (HUAWEI TECHNOLOGIES CO., LTD.) 07 June 2022 (2022-06-07) entire document | 1-26 |
| A | US 2021076388 A1 (INTEL CORP.) 11 March 2021 (2021-03-11) entire document | 1-26 |
| A | WO 2022073192 A1 (LENOVO (BEIJING) LIMITED) 14 April 2022 (2022-04-14) entire document | 1-26 |

| ☐ Further documents are listed in the continuation of Box C. | ☑ See patent family annex. |
| --- | --- |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 September 2023** | **20 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/103472**

| Patent document cited in search report | | | Publication date (day/month/year) | Patent family member(s) | | | Publication date (day/month/year) |
|---|---|---|---|---|---|---|---|
| US | 2022224482 | A1 | 14 July 2022 | KR | 20220039745 | A | 29 March 2022 |
| | | | | KR | 102508031 | B1 | 10 March 2023 |
| | | | | US | 11658785 | B2 | 23 May 2023 |
| | | | | US | 2023074690 | A1 | 09 March 2023 |
| | | | | US | 11689330 | B2 | 27 June 2023 |
| | | | | WO | 2021066630 | A1 | 08 April 2021 |
| CN | 114600524 | A | 07 June 2022 | None | | | |
| US | 2021076388 | A1 | 11 March 2021 | None | | | |
| WO | 2022073192 | A1 | 14 April 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210912610